# EUROPÄISCHE PATENTANMELDUNG

(11) **EP 4 670 833 A1**
(43) Veröffentlichungstag der Anmeldung: **31.12.2025**
(21) Anmeldenummer: 25184088.0
(22) Anmeldetag: 20.06.2025
(51) Int. Cl.: B01J 8/02, B01J 19/00, B01J 8/00

(54) **GERÜHRTER MIKROREAKTOR MIT VERBESSERTER KATALYSATORBELADUNG**

(30) Priorität: 24.06.2024 DE 102024117671
(71) Anmelder: Forschungszentrum Jülich GmbH, 52425 Jülich (DE)
(72) Erfinder: Hüging, Justus, 52428 Jülich (DE); Meißner, Jan, 52441 Linnich (DE); Häusler, Johannes, 85368 Moosburg (DE); Peters, Ralf, 52146 Würselen (DE)
(74) Vertreter: Michalski Hüttermann & Partner Patentanwälte mbB

(57) **Zusammenfassung**

Die vorliegende Erfindung betrifft einen Hochtemperaturmikroreaktor umfassend einem Reaktorbehälter und einem auf dem Reaktorbehälter mechanisch anordbaren Reaktordeckel mit einer durch den Reaktordeckel führbaren mechanischen Welle zum Antrieb einer im Reaktorbehälter liegenden Rühreinrichtung und ein, durch den Reaktordeckel führbares Probenentnahmerohr, wobei der Mikroreaktor einen im Inneren des Reaktorbehälters anordbaren, zur Aufnahme partikulärer Festkörper geeigneten, flüssigkeitsdurchlässigen Aufnahmebehälter aufweist, wobei der Aufnahmebehälter über eine Fixiervorrichtung ortsfest an der mechanischen Welle befestigbar ist.

## Beschreibung

Die vorliegende Erfindung betrifft einen Hochtemperaturmikroreaktor umfassend einem Reaktorbehälter und einem auf dem Reaktorbehälter mechanisch anordbaren Reaktordeckel mit einer durch den Reaktordeckel führbaren mechanischen Welle zum Antrieb einer im Reaktorbehälter liegenden Rühreinrichtung und ein, durch den Reaktordeckel führbares Probenentnahmerohr, wobei der Mikroreaktor einen im Inneren des Reaktorbehälters anordbaren, zur Aufnahme partikulärer Festkörper geeigneten, flüssigkeitsdurchlässigen Aufnahmebehälter aufweist, wobei der Aufnahmebehälter über eine Fixiervorrichtung ortsfest an der mechanischen Welle befestigbar ist.

Zur Durchführung chemischer Reaktionen sind aus der Wissenschaft und der Industrie eine Vielzahl unterschiedlicher Reaktortypen und -ausgestaltungen bekannt. Je nach Kategorie der durchzuführenden Reaktionen, unter anderem in Form von Batch oder kontinuierlich geführten Umsetzungen, können die verschiedensten Aufbauten für die nötige Reaktionsumgebung gewählt werden, welche eine sichere und reproduzierbare Prozessführung erlauben. Neben diesen grundsätzlichen Überlegungen bilden verständlicherweise die im Rahmen der Umsetzung letztendlich zu erreichenden Reaktionsbedingungen, beispielsweise für Druck, Temperatur oder Reaktionsvolumen, weitere, wichtige Randbedingungen für die Reaktorauslegung, da längere Standzeiten des Reaktors und eine effiziente Reaktionskontrolle nur bei einer adäquaten Materialwahl und einem angepassten Reaktordesign erreicht werden können. Verkompliziert wird die Auswahl und das Design an Reaktoren zusätzlich noch für die Fälle, in denen neben den festen Ein- und Aufbauten auch noch flexible einsetzbare Zusatzfunktionen im Reaktorraum bereitgestellt werden sollen. Diese kann beispielsweise das Einbringen von Katalysatoren in den Reaktionsraum umfassen, wobei hier insbesondere Sorge zu tragen ist, dass für die Katalysatoren ausreichend Platz vorhanden ist und diese über die Reaktionszeit hin mechanisch intakt bleiben. Insbesondere im Bereich von Hochtemperaturreaktoren mit sehr niedrigen Innenvolumen ist dies eine Herausforderung, da der zur Verfügung stehende Reaktionsraum sehr begrenzt ist.

Auch in der Patentliteratur findet man die unterschiedlichsten Ansätze zur Bereitstellung zusätzliche Funktionalitäten in Hochtemperaturreaktoren.

So beschreibt beispielsweise die US 4 702 888 A einen beweglichen, gerührten Mikroreaktor vom Chargentyp zum Reagieren einer Chargenmischung aus fester Kohle, flüssigem Lösungsmittel und gasförmigem Wasserstoff bei Temperaturen von 600 DEG-900 DEG F. in etwa zwei bis fünf Minuten, wobei der Mikroreaktor ein abgedichtetes Druckgefäß zur Aufnahme von Reaktanten umfasst und darin eine erste Öffnung zum Einführen von Mitteln zur kontinuierlichen Überwachung der Temperatur innerhalb des Gefäßes, eine zweite Öffnung, Mittel zum Einspeisen von Wasserstoff in das Druckgefäß, um den internen Wasserstoffdruck einzustellen, und eine dritte Öffnung, eine Welle, die sich durch die dritte Öffnung in das Druckgefäß erstreckt, Mittel zum Antrieb der Welle, die außerhalb des Gefäßes angebracht sind, ausgebildet sind, ein Flügelrad, das innerhalb des Gefäßes angeordnet und an der Welle befestigt ist und von dieser angetrieben wird, um Reaktanten in dem Gefäß zu rühren, wobei das Flügelrad eine Vielzahl von im wesentlichen vertikalen Schaufeln umfasst, die an der Welle befestigt sind und diese umgeben, Ablenkmittel, die über dem Flügelrad angebracht sind, um einen Wirbel in der Fluidbewegung um die Welle herum zu brechen, und Mittel zum selektiven Anheben und Absenken des Mikroreaktors in ein temperaturgesteuertes Bad hinein und aus diesem heraus, um ein Aufheizen und Abkühlen einer darin enthaltenen Chargenmischung innerhalb eines gewünschten Zeitraums steuerbar zu bewirken.

Des Weiteren offenbart die EP 1 897 612 A1 einen Mikroreaktor, wobei der Mikroreaktor umfasst: eine Reaktionskammer, die einen Hohlraum definiert; ein Heizelement; einen ersten Kanal, der die Reaktionskammer mit der Umgebung verbindet, und einen Hilfskanal, der mit der Reaktionskammer verbunden ist, wobei der Hilfskanal eine Kapillaröffnung zur Druckreduzierung umfasst, wobei die Reaktionskammer, der erste Kanal und der Hilfskanal integral zumindest teilweise in einem einzigen monolithischen Element ausgebildet sind, und wobei das Heizelement - zumindest teilweise - in und/oder auf dem einzigen, monolithischen Element hergestellt ist.

Auch die CN 110 523 354 A beschreibt ein Verfahren zur Herstellung eines Mikroreaktors, der einen festen Katalysator enthält, dadurch gekennzeichnet, dass es insbesondere die folgenden Schritte umfasst: (1) Das erste Monomer A wird in einem ersten Lösungsmittel gelöst, und ein erstes Kontrollmittel AP wird hinzugefügt, um eine erste Lösung zu erhalten, das molare Verhältnis des ersten Kontrollmittels AP zum ersten Monomer A beträgt 0,01-200: 1, die Konzentration des ersten Monomers A in der ersten Lösung beträgt 0,01-100 mM.

Vor diesem Hintergrund des Standes der Technik ist es daher Aufgabe der Erfindung, einen verbesserten Aufbau für einen Hochtemperatur-Mikroreaktor bereitzustellen. Insbesondere soll mit der erfindungsgemäßen Vorrichtung eine sichere und platzsparende Lösung für das Einbringen eines Katalysators in einen beengten Reaktorraum ermöglicht werden.

Diese Aufgabe der Erfindung wird mit einem Hochtemperaturmikroreaktor mit den im Anspruch 1 angegebenen Merkmalen gelöst. Bevorzugte Weiterbildungen der Erfindung sind in den zugehörigen Unteransprüchen, der nachfolgenden Beschreibung und den Zeichnungen angegeben.

Erfindungsgemäß ist ein Hochtemperaturmikroreaktor umfassend einem Reaktorbehälter und einem auf dem Reaktorbehälter mechanisch anordbaren Reaktordeckel, wobei das Innenvolumen des Reaktorbehälters kleiner oder gleich 300 cm³ beträgt und der Reaktorbehälter und der Reaktordeckel, zumindest zum Teil, aus Metall bestehen, wobei der Mikroreaktor mindestens eine, durch den Reaktordeckel führbare mechanische Welle zum Antrieb einer im Reaktorbehälter liegenden Rühreinrichtung und ein, durch den Reaktordeckel führbares Probenentnahmerohr umfasst, wobei der Mikroreaktor einen im Inneren des Reaktorbehälters anordbaren, zur Aufnahme partikulärer Festkörper geeigneten, flüssigkeitsdurchlässigen Aufnahmebehälter aufweist, wobei der Aufnahmebehälter über eine Fixiervorrichtung ortsfest an der mechanischen Welle befestigbar ist.

Überraschenderweise wurde gefunden, dass sich über oben angegebenen Aufbau ein räumlich kompakter und in seinen Funktionen mechanisch stabilisierter Reaktor bereitstellen lässt, welcher ein relative großes Katalysatorvolumen für ablaufende chemische Reaktionen bereitstellen kann, ohne dass die Gefahr besteht, dass die Katalysatoren mechanisch beschädigt werden. Letzteres kann für gerührte Hochtemperaturmikroreaktoren der Fall sein, da durch die Einbauten zum Rühren und zur Entnahme von Proben der Platz im Inneren des Reaktors sehr begrenzt ist. Eine Anordnung der Katalysatoren in einem Aufnahmebehälter, welcher mechanisch an der Rührerwelle angeordnet ist, führt nicht nur dazu, dass sich die Katalysatoren in sicherer Entfernung zum eigentlichen Rührer befinden, es ist über diese Anordnung auch gleichzeitig möglich, dass die Rührwelle im Reaktor mechanisch stabilisiert wird. Durch die Stabilisierung lassen sich Unwuchten der Welle verringern und man erhält eine gleichmäßigere Konvektion innerhalb des Reaktorvolumens. Diese Lösung ist nicht naheliegend, da eine Anordnung des Katalysatorbehälters an sich bewegenden Teilen eher fernliegt. Es hat sich aber gezeigt, dass sich diese Lösung mechanisch sicher umsetzten lässt. Der Mischleistung wird nicht beeinträchtigt, im Gegenteil, aufgrund der weiteren mechanischen Führung der Rührwelle durch die Anordnung des Katalysatorbehälters an dieser, lassen sich auch höhere Rührerumdrehungen und somit Mischleistungen erreichen. Diese Lösung lässt sich auch platzsparend umsetzten, sodass innerhalb des sehr begrenzten Reaktorvolumens noch eine ausreichende Menge an durchmischter Reaktionslösung bereitgestellt werden kann.

Der Hochtemperaturmikroreaktor umfasst einen Reaktorbehälter und einen auf dem Reaktorbehälter mechanisch anordbaren Reaktordeckel. Der Grundaufbau des Reaktors besteht aus einem Reaktorbehälter, welcher den eigentlichen Reaktionsraum definiert und einem Reaktordeckel, welcher den Reaktor am oberen Ende verschließt. Der Reaktorbehälter kann ein- oder mehrwandig ausgeführt sein. Die Anordnung des Reaktordeckels auf den Reaktorbehälter kann über ein mechanisches Fixieren des Deckels an den Rändern oder am Außenumfang des Reaktorbehälters erfolgen. Die Fixierung der beiden Teile kann beispielsweise über Schrauben oder Klemmen erfolgen. Bevorzugt kann dieser Zwischenbereich zwischen Behälter und Deckel abgedichtet sein. Bevorzugt kann die Abdichtung über einen O-Ring, eine Dichtscheibe oder -Band erfolgen. Der Reaktorbehälter kann des Weiteren von außen temperierbar ausgestaltet sein. Dazu kann im direkten Kontakt um den Reaktorbehälter eine Heizung, beispielsweise in Form einer Widerstandsheizung, angeordnet sein. Der Reaktorbehälter kann beispielsweise eine zylindrische Grundgeometrie aufweisen, bevorzugt mit einem Reaktorboden, welcher eine halbkugelform aufweisen kann. Es ist aber auch prinzipiell möglich, dass der Reaktorbehälter in der Grundsymmetrie von einer Zylinderform abweicht.

Das Innenvolumen des Reaktorbehälters beträgt kleiner oder gleich 300 cm³. Der erfindungsgemäße Reaktor ist in den Fällen ein Mikroreaktor, in denen das nutzbare Innenvolumen des Reaktors kleiner als 300 cm³ ist. Das Innenvolumen ergibt sich als das durch den Reaktorbehälter umschlossene Volumen, welches beispielsweise durch Auslitern bestimmt werden kann. Innerhalb dieser Dimension des Innenvolumen ergibt sich bei gerührten Reaktoren ein großes Platzproblem, da die sämtliche Mechanik zum Betreiben des Reaktors innerhalb des Reaktors untergebracht sein muss. Die voluminösen Einbauten beschränken das nutzbare Innenvolumen, sodass eine unabhängige Anordnung weiterer Einbauten nicht einfach möglich ist. Bevorzugt kann das Innenvolumen des Reaktorbehälters kleiner oder gleich 200 cm³ und weiter bevorzugt kleiner oder gleich 100 cm³ betragen. Insbesondere mit diesen geringen Innenvolumina ergibt sich eine sichere Aufbewahrung der Katalysatorpartikel und eine verbesserte mechanische Stabilisierung der Rühreinrichtung.

Der Reaktorbehälter und der Reaktordeckel bestehen, zumindest zum Teil, aus Metall. Zum sicheren Betrieb des Reaktors auch unter hohen Temperaturen, muss zumindest ein Teil des Reaktorbehälters oder des Deckels aus Metall gefertigt sein. Es ist dementsprechend auch möglich, beispielsweise einen Teil des Reaktors aus Metall und einen anderen Teil beispielsweise aus einem temperaturbeständigen Kunststoff zu fertigen. In mehrwandigen Aufbauten des Reaktorbehälters kann eine Wand aus Metall und eine Wand aus Kunststoff gefertigt sein. Bevorzugt bestehen sowohl Reaktorbehälter wie auch Reaktordeckel aus Metall.

Der Mikroreaktor umfasst mindestens eine, durch den Reaktordeckel führbare mechanische Welle zum Antrieb einer im Reaktorbehälter liegenden Rühreinrichtung. Die Rühreinrichtung des Behälters lässt sich nur durch eine, von außen angetriebene Welle realisieren, da andere Möglichkeiten, beispielsweise durch einen magnetischen Antrieb, über die teilweise metallische Ausgestaltung des Reaktorbehälters entfallen. Die Welle kann beispielsweise in Form eines zylindrischen Stabes ausgeführt sein, welche sich durch den Reaktordeckel erstreckt. Dazu kann im Reaktordeckel ein Gleitlager zur Abdichtung untergebracht sein. Am Ende der Welle im Reaktorinnenvolumen kann die eigentliche Rühreinrichtung in Form eines Blatt-, Impeller-, Scheiben- oder Ankerrührers vorliegen. Bevorzugt kann ein Impellerrührer oder eine Rushton-Turbine verwendet werden. Die Welle kann außerhalb des Reaktors von einem Motor angetrieben sein.

Des Weiteren umfasst der Reaktor ein, durch den Reaktordeckel führbares Probenentnahmerohr. Neben der Rühreinrichtung wird über den Reaktordeckel auch ein Probenentnahmerohr geführt, welches Reaktionsflüssigkeiten in den Reaktor eingeben oder ausführen kann. Unter Druckbeaufschlagung des Reaktors ist dann nur eine Entnahme möglich. Das Probenentnahmerohr kann als Hohlstab ausgeführt sein. Das Probennahmerohr kann aus Metall gefertigt sein. Bevorzugt kann sich das Probennahmerohr bis zu 5 cm, des Weiteren bevorzugt bis zu 7,5 cm und weiter bevorzugt bis zu 10,5 cm in den Reaktor erstrecken. Im Rahmen des erfindungsgemäßen Aufbaus lassen sich also auch in sehr beengten Platzverhältnissen relativ lange und dicke Probenentnahmerohre realisieren. Das Probenentnahmerohr kann beispielsweise einen Außendurchmesser von größer oder gleich 2 mm und kleiner oder gleich 15 mm aufweisen. Des Weiteren bevorzugt kann Außendurchmesser größer oder gleich 5 mm und kleiner oder gleich 10 mm sein.

Der Mikroreaktor weist einen im Inneren des Reaktorbehälters anordbaren, zur Aufnahme partikulärer Festkörper geeigneten, flüssigkeitsdurchlässigen Aufnahmebehälter weist. Im erfindungsgemäßen Fall katalysierter Reaktionen liegt der Katalysator innerhalb eines Aufnahmebehälters im Reaktorinneren vor. Der Aufnahmebehälter ist zur Aufnahme partikulärer Katalysatoren eingerichtet. Flüssige Katalysatoren können vom Aufnahmebehälter nicht ortsfest gehalten werden. Partikuläre Festkörper-Katalysatoren sind beispielsweise geträgerte Katalysatorpartikel, in denen die aktiven Katalysatorsubstanzen auf einer festen Trägeroberfläche vorliegen. Die Katalysatoren sind im Reaktionsmedium nicht löslich. Es ist aber auch möglich, dass unlösliche, nicht-geträgerte Katalysatoren verwendet werden. Der Aufnahmebehälter ist zur Aufnahme der Festkörper in den Fällen geeignet, in denen die Katalysatorteilchen nicht oder in nur sehr geringen Ausmaßen aus den Aufnahmebehälter frei in die Reaktionsflüssigkeit außerhalb des Aufnahmebehälters übertreten können. Die partikulären Festkörper werden also durch den Aufnahmebehälter ortsfest im Reaktor gehalten und werden über die gerührte Reaktionsflüssigkeit kontaktiert.

Der Aufnahmebehälter ist über eine Fixiervorrichtung ortsfest an der mechanischen Welle befestigbar. Die Anordnung des Aufnahmebehälter erfolgt über eine Anbindung an die Rührerwelle. Dazu wird der Aufnahmebehälter reversibel an dieser befestigt, beispielsweise geklemmt. Durch die mechanische Fixierung ändert sich die relative Lage des Aufnahmebehälters während der Reaktion nicht oder nur unwesentlich. Insbesondere kann sich der Aufnahmebehälter nicht frei im Reaktionsvolumen bewegen.

In einer bevorzugten Ausführungsform des Hochtemperaturmikroreaktors kann die Fixiervorrichtung dazu eingerichtet sein, den Aufnahmebehälter an der mechanischen Welle und am Probenentnahmerohr ortsfest anzuordnen. Für die Stabilisierung der mechanischen Rührwelle hat es sich als besonders geeignet herausgestellt, dass Aufnahmebehälter über eine gemeinsame Fixiervorrichtung sowohl an der mechanischen Welle als auch am Probenentnahmerohr angeordnet ist. Bevorzugt kann der Aufnahmebehälter in derselben Höhe ortsfest, sowohl mit der Welle als auch mit dem Probenentnahmerohr, verbunden sein. Bevorzugt kann die mechanische Verbindung über eine Klemmvorrichtung ausgeführt sein, wobei ein Teil der Klemmvorrichtung das Probenentnahmerohr, ein weiterer Teil die Welle und ein dritter Teil den Aufnahmebehälter kontaktiert.

In einer weiter bevorzugten Charakteristik des Hochtemperaturmikroreaktors können im Reaktor zwei Fixiervorrichtungen vorliegen, wobei eine der Fixiervorrichtungen das Probenentnahmerohr und die mechanische Welle und eine weitere Fixiervorrichtung das Probenentnahmerohr, die mechanische Welle und den Aufnahmebehälter mechanisch gegeneinander fixieren. Eine besonders effiziente Festlegung der Position des Aufnahmebehälters und eine besonders gute Stabilisierung der Rührvorrichtung kann in den Fällen erreicht werden, in welchen zwei unabhängige Fixiervorrichtungen vorliegen. Eine der Fixiervorrichtung umfasst dabei nur die Welle und das Probennahmerohr, wohingegen die zweite Fixiervorrichtung sowohl Welle wie auch Rohr und den Aufnahmebehälter umfasst. Beide Fixiervorrichtungen können beispielsweise in Form von Klemmen, eventuell mit weiteren Befestigungsmitteln, vorliegen.

In einem weiterhin bevorzugten Aspekt des Hochtemperaturmikroreaktors kann die Fixiervorrichtung mindestens ein Gleitlager aufweisen. Zur ortsfesten Anbindung des Aufnahmebehälters an die Welle hat sich die Fixierung mittels eines Gleitlagers bewährt. Das Gleitlager ermöglicht eine sichere mechanische Anbindung des Aufnahmebehälters unter hinreichender mechanischer Stabilisierung der Welle. Bevorzugt kann das Gleitlager aus einem Kunststoff, weiter bevorzugt aus PTFE, ausgebildet sein.

Innerhalb einer bevorzugten Ausführungsform des Hochtemperaturmikroreaktors können die Wände des Aufnahmebehälters aus einem Drahtgeflecht bestehen, wobei die Maschenweite des Drahtgeflechts größer oder gleich 37 µm und kleiner oder gleich 400 µm beträgt. Für eine abgestimmte Größe der Katalysatorpartikel und dem Aufnahmebehälter, unter Einbezug des Reaktorvolumens, hat sich oben angegebener Bereich an Maschenweiten als besonders geeignet herausgestellt. Die Katalysatorpartikel werden auch bei hohen Drehzahlen sicher zurückgehalten und es ergibt sich eine ausreichende Durchströmung des Aufnahmebehältervolumens. Des Weiteren bevorzugt kann die Maschenweite größer oder gleich 50 µm und kleiner oder gleich 300 µm, des Weiteren bevorzugt größer oder gleich 60 µm und kleiner oder gleich 150 µm betragen. Bevorzugt kann das Drahtgeflecht des Aufnahmebehälters aus einem Metall oder einem inerten und hitzebeständigen Kunststoff, wie beispielsweise PTFE, ausgebildet sein.

Im Rahmen eines bevorzugten Aspektes des Hochtemperaturmikroreaktors kann die Fixiervorrichtung Befestigungsmittel zur weiteren mechanischen Befestigung des Aufnahmebehälters aufweisen. Für eine sichere und sehr ortsfeste mechanische Fixierung des Aufnahmebehälters kann es vorteilhaft sein, dass neben einer mechanischen Klemmung noch weitere Mittel zur Stabilisierung der mechanischen Verbindung zum Aufnahmebehälter vorgesehen werden. Es hat sich gezeigt, dass insbesondere Madenschrauben sich sehr gut dazu eignen, die Welle weiter mechanisch an den Aufnahmebehälter zu koppeln. Es können auftretende Schwingungen der Welle gedämpft und ein ruhiger Rührvorgang durchgeführt werden. Innerhalb einer weiter bevorzugten Ausführungsform des Hochtemperaturmikroreaktors kann das Innenvolumen des Reaktorbehälters zylindrisch ausgestaltet sein, wobei ein Verhältnis aus dem Innendurchmesser des Reaktorbehälters zur größten Ausdehnung der Fixiervorrichtung in radialer Richtung, ermittelt nach Innendurchmesser des Reaktorbehälters dividiert durch längste Ausdehnung der Fixiervorrichtung in radialer Richtung, größer oder gleich 2 und kleiner oder gleich 4 beträgt. Innerhalb dieser Relationen ergibt sich ein hocheffizienter Reaktor, welcher einen großen Anteil seines Innenvolumens für eine Katalysatorschüttung bereitstellen und unter hohen Konvektionsgeschwindigkeiten sicher betrieben werden kann. Der Volumenanteil an nicht funktionalen Einbauten wird geringgehalten, obwohl sich eine signifikante mechanische Stabilisierung der Rührerwelle erreichen lässt. Diese Ausgestaltung lässt sich unter hohen Temperaturen und langen Reaktionszeiten sicher betreiben, wobei insbesondere die mechanische Integrität der Katalysatorpartikel gewährleistet ist. Weiter kann es vorteilhaft sein, dass der Mikroreaktor zusätzlich einen Kühlfinger und ein Thermofühler umfasst, wobei der Kühlfinger und der Thermofühler durch den Reaktordeckel führbar sind. Durch die effiziente Ausnutzung des Reaktorvolumens lassen sich weitere Funktionalitäten in den Reaktor integrieren, welche in Standardaufbauten aufgrund Platzmangels so nicht integrierbar wären. Zumindest würde ein Einbau ortsfest gehaltener Katalysatoren deutlich erschwert.

Nach einer bevorzugten Charakteristik des Hochtemperaturmikroreaktors kann der Aufnahmebehälter ein Innenvolumen von größer oder gleich 5% und kleiner oder gleich 20 % bezogen auf das Volumen des Reaktorbehälter aufweisen. Mittels der erfindungsgemäßen Anordnung lassen sich relativ große Aufnahmebehälter bereitstellen, welche einen signifikanten Einsatz an Katalysatorvolumen erlauben. Diese Größenordnung an Katalysatorschüttungen lassen sich in üblichen Aufbauten nicht erreichen. Eine besonders effiziente mechanische Stabilisierung der Welle und des Aufnahmebehälters kann sich in den Fällen ergeben, in denen der Aufnahmebehälter der Symmetrie des Reaktors folgt und das Innenvolumen im oben angegebenen Bereich liegt. Somit kann ein ausreichendes Volumen an Katalysatorpartikeln eingebracht werden, ohne das Volumen für die freie, nicht den Katalysator kontaktierende Reaktionsflüssigkeit zu weit einzuschränken. Zum Erhalt eines möglichst homogenen Strömungsprofils, kann die Zylinderform des Aufnahmebehälters die Rührwelle, zumindest teilweise, umfassen. Bevorzugt kann eine Außenseite des Aufnahmebehälters von den eigentlichen Rührwerkzeugen, beispielsweise in Form von Flügeln, größer oder gleich 5 mm und kleiner oder gleich 30 mm, weiter bevorzugt größer oder gleich 10 mm und kleiner oder gleich 25 mm angeordnet sein. Bevorzugt kann es sich um einen Aufnahmebehälter mit zylindrischer Symmetrie handeln, wobei der Außendurchmesser des Aufnahmebehälters >= 50% und kleiner oder gleich 100% eines Ringspaltes zwischen Innenwand des Reaktors und Außendurchmesser der Rührwelle beträgt. Der Aufnahmebehälter kann als Korb in Form eines Ringsegmentes ausgestaltet sein, wobei die äußeren Abmessungen des Korbes Da kleiner oder gleich 100% und größer oder gleich 90% bezogen auf die Innenwand des Reaktors betragen. Die Differenz zwischen Außen- und Innendurchmesser kann größer oder gleich 50% und kleiner oder gleich 100% bezogen auf die Ausdehnung des Ringspaltes zwischen Innenwand des Reaktors und Außendurchmesser der Rührwelle betragen. Die Winkel eines Ringsegments können größer oder gleich 30° und kleiner oder gleich 270° betragen. Bevorzugt kann der Aufnahmebehälter ein Innenvolumen von größer oder gleich 7% und kleiner oder gleich 15 %, des Weiteren bevorzugt von größer oder gleich 8% und kleiner oder gleich 13 % bezogen auf das Volumen des Reaktorbehälter aufweisen.

In einer bevorzugten Ausführungsform des Hochtemperaturmikroreaktors können im Inneren des Mikroreaktors zwei voneinander getrennte Aufnahmeräume angeordnet sein. Die beiden Aufnahmeräume weisen jeweils eine eigene, voneinander unabhängige Außenwand auf. Bevorzugt sind beide Aufnahmeräume über denselben Fixiermechanismus an unterschiedlichen Seiten der Welle angeordnet. Diese Aufteilung kann das Strömungsprofil innerhalb des Reaktors, unter einer gleichzeitig symmetrischen mechanischen Stabilisierung der Welle, verbessern.

Des Weiteren erfindungsgemäß ist die Verwendung eines erfindungsgemäßen Hochtemperaturmikroreaktor zur Durchführung einer katalysierten, chemischen Reaktion, wobei die im flüssigkeitsdurchlässigen Aufnahmebehälter angeordneten partikulären Festkörper eine mittlere Partikelgröße, ermittelt über Mikroskopie, von größer oder gleich 75 µm und kleiner oder gleich 300 µm aufweisen. Mittels des erfindungsgemäßen Aufbaus des Reaktors lassen sich in diesem Umfeld auch Katalysatorpartikel einsetzen, welche in bekannten Aufbauten über die Reaktion hinweg einen zu starken mechanischen Abbau erfahren. Insbesondere diese Partikelgrößen liefern eine hinreichende Oberfläche und können so auch in relativ geringen Katalysator-Gesamtvolumina eingesetzt werden. Bevorzugt kann diese Verwendung in Mikroreaktoren mit einem Innenvolumen von kleiner oder gleich 100 cm³ erfolgen. Bevorzugt kann die Partikelgröße der Katalysatoren größer oder gleich 100 µm und kleiner oder gleich 250 µm, des Weiteren bevorzugt größer oder gleich 125 µm und kleiner oder gleich 200 µm, betragen. Bevorzugt kann die mittlere Partikelgröße kleiner oder gleich 1/3 der kleinsten inneren Abmessung des Aufnahmebehälters betragen. Die partikulären Festkörper können beispielsweise geträgerte Katalysatorpartikel darstellen. Es ist aber auch möglich, dass es sich bei den partikulären Festkörpern um gepresste Katalysatorpellets handelt. Insbesondere kann es sich bei gepressten Katalysatorpellets um beispielsweise Aktivkohle-, Aluminiumoxid-, Siliziumoxid-, Keramik-Träger handeln, auf welche die katalytisch aktive Substanz aufgetragen ist. Diese Katalysatoren lassen sich bevorzugt verwenden, da diese im Vergleich zu suspendierten, pulverförmigen Materialien durch den Rührer eher mechanisch zerstört werden. Es lassen sich dementsprechend nicht nur höhere Katalysatorvolumina, sondern auch mechanisch weniger beanspruchbare Katalysatortypen verwenden.

Beispiele und Ausführungsformen der vorliegenden Erfindung werden noch in exemplarischer Weise mit Bezug auf die Figuren 1 bis 4 beschrieben.

Die Figuren zeigen:
- Fig. 1: eine schematische Darstellung eines erfindungsgemäßen Hochtemperaturmikroreaktors im Schnitt;
- Fig. 2: eine schematische Darstellung eines erfindungsgemäßen Hochtemperaturmikroreaktors von unten;
- Fig. 3: eine schematische Darstellung eines erfindungsgemäßen Hochtemperaturmikroreaktors in einer Schrägansicht;
- Fig. 4: eine schematische Darstellung eines erfindungsgemäßen Hochtemperaturmikroreaktors in einer weiteren Schrägansicht;
- Fig. 5: eine schematische Darstellung einer möglichen Ausgestaltung einer Fixiervorrichtung;
- Fig. 6: eine schematische Darstellung einer möglichen Ausgestaltung einer weiteren Fixiervorrichtung.

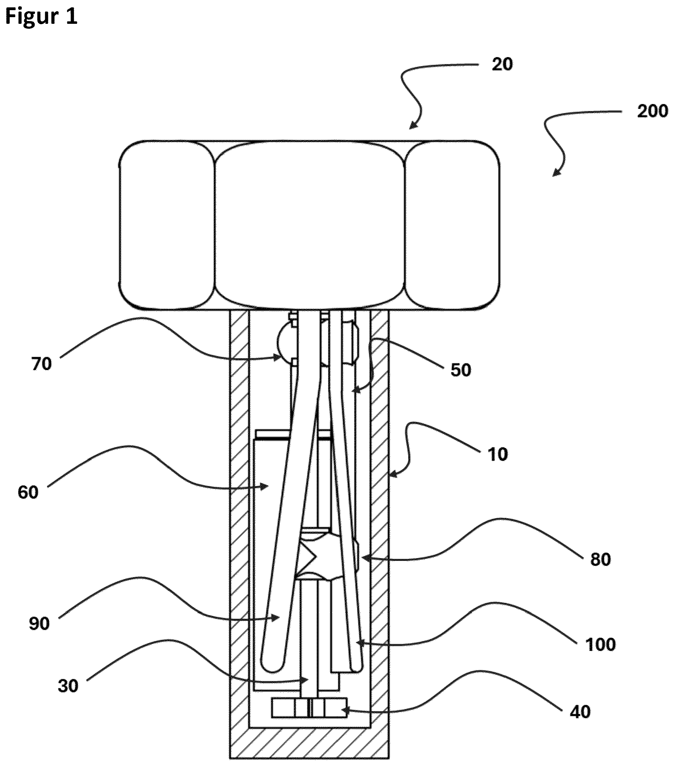

Die Figur 1 zeigt eine schematische Darstellung eines erfindungsgemäßen Hochtemperaturmikroreaktors 200 im Schnitt. Dargestellt ist der Aufbau des Hochtemperaturmikroreaktors 200 mit einem Reaktorbehälter 10 und einen darauf anordbaren Reaktordeckel 20. Sowohl Reaktorbehälter 10 wie auch Reaktordeckel 20 können zweckmäßigerweise aus Metall gefertigt sein, welches die Temperaturbeständigkeit des Reaktors erhöht. Der Hochtemperaturmikroreaktor 200 weist ein geringes Innenvolumen auf, welches die Durchführung von Reaktionen mit geringen Mengen an Chemikalien erlaubt. Oberhalb des Reaktordeckels 20 können noch weitere Aufbauten vorliegen, welche zum Betrieb des Hochtemperaturmikroreaktors 200 nötig sind. Dazu können beispielsweise ein Manometer, ein Inertgasanschluss oder ein elektrischer Motor zum Antrieb einer Welle 30 gehören. Durch den Reaktordeckel 20 müssen sämtliche Einbauten geführt werden, welches den zur Verfügung stehenden Platz innerhalb des Hochtemperaturmikroreaktors 200 deutlich einschränkt. In dieser Ausführungsform ist durch den Reaktordeckel 20 die Welle 30 geführt, welche am unteren Ende eine Rührvorrichtung 40 aufweist. Mit der Rührvorrichtung 40 wird das Innenvolumen des Hochtemperaturmikroreaktors 200 gerührt. Neben der Welle 30 ist auch ein Probenentnahmerohr 50 durch den Reaktordeckel 20 geführt. Durch das Probenentnahmerohr 50 können Substanzen in den Reaktorbehälter 10 gegeben oder aus diesem entnommen werden. Der Aufnahmebehälter 60 ist zur Aufnahme partikulärer Katalysatoren eingerichtet und ist über eine Fixiervorrichtung 70 an der Welle 30 und an dem Probeentnahmerohr 50 ortsfest angebunden. Die Fixiervorrichtung 70 ermöglicht eine sichere Fixierung des Aufnahmebehälters 60 im Reaktorbehälter 10 und, gleichzeitig, führt auch zu einer Stabilisierung der Welle 30. Somit können höhere Wellengeschwindigkeiten erreicht werden. Die Fixiervorrichtung 70 kann in unterschiedlichen Höhen an der Welle 30 angeordnet sein. So lassen sich unterschiedliche Volumina für den Aufnahmebehälter 60 bereitstellen. Der Aufnahmebehälter 60 kann beispielsweise, in Form eines Korbes, aus einem Drahtgeflecht bestehen, welcher mittels eines reversibel schließbaren Deckels beladen und entladen werden kann. Der Aufnahmebehälter 60 ist für flüssige Medien durchlässig und ermöglicht so eine Umströmung der Katalysatoren mit Reaktionsmedium. Zur weiteren Stabilisierung ist der Aufnahmebehälter 60 mittels der Fixiervorrichtung 70 auch am Probenentnahmerohr 50 angebunden. Dies kann die mechanische Stabilisierung des Gesamtsystems noch weiter erhöhen. Zudem ist es möglich, dass die Welle 30 mit dem Aufnahmebehälter 60 noch über eine weitere mechanische Verbindung, in Form einer weiteren Fixiervorrichtung 80, verbunden wird. Man erhält so eine zweifache Stabilisierung der Welle 30. Die Welle 30 kann dabei mittels eines Gleitlagers, beispielsweise aus Kunststoff, in die Fixiervorrichtung 70 und/oder die weitere Fixiervorrichtung 80 eingebunden sein. Weiterhin kann der Aufbau des Hochtemperaturmikroreaktors 200 einen optionalen Thermofühler 100 und einen Kühlfinger 90 aufweisen.

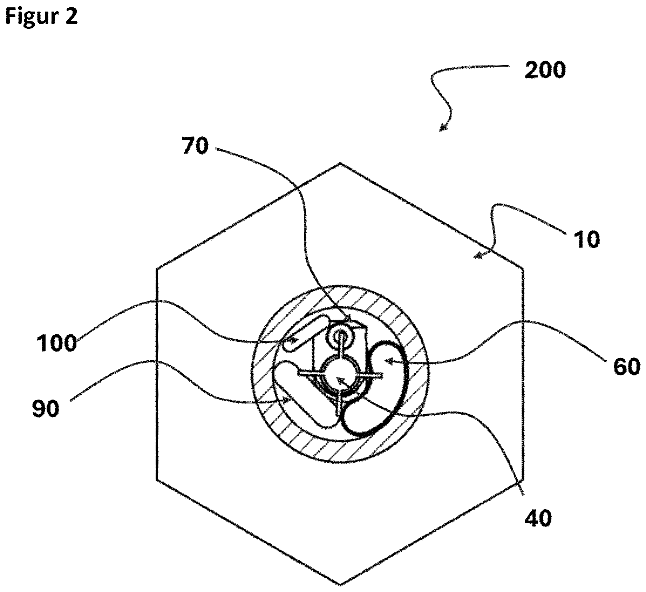

Die Figur 2 zeigt eine schematische Darstellung eines erfindungsgemäßen Hochtemperaturmikroreaktors 200 von unten. In dieser Ansicht sieht man die Anordnung der einzelnen funktionalen Bestandteile von unten. Dargestellt ist der Reaktorbehälter 10 und die an der Welle 30 angebrachte Rühreinrichtung 40. Diese kann beispielsweise in Form eines Impeller-Rührers oder eine Rushton-Turbine ausgestaltet sein. Weiterhin ist der Aufnahmebehälter 60, der Kühlfinger 90 und der Thermofühler 100 dargestellt. Zusätzlich ist die Fixiervorrichtung 70 gezeigt, welche die mechanische Anbindung des Aufnahmebehälters 60 an die Welle 30 und das Probenentnahmerohr 50 ermöglicht. Die Fixiervorrichtung 70 kann beispielsweise als eine gewinkelte Klammer vorliegen, welche für die Welle 30, den Aufnahmebehälter 60 und das Probenentnahmerohr 50 Bohrungen aufweist. Die Bohrung für die Welle 30 kann in Form eines Gleitlagers ausgestaltet sein. Die Fixiervorrichtung 70 kann des Weiteren Bohrungen aufweisen, durch welche Schrauben führbar sind. Durch die Schrauben kann die Stärke der mechanischen Stabilisierung bestimmt werden. Bevorzugt können hierzu Madenschrauben eingesetzt werden. Dadurch lassen sich insbesondere räumlich sehr kleine Fixiervorrichtungen 70 erhalten werden, welche eine sichere Befestigung des Aufnahmebehälters 60 unter Erhalt eines Großteils des Reaktionsvolumens innerhalb des Reaktorbehälters 10 ermöglichen.

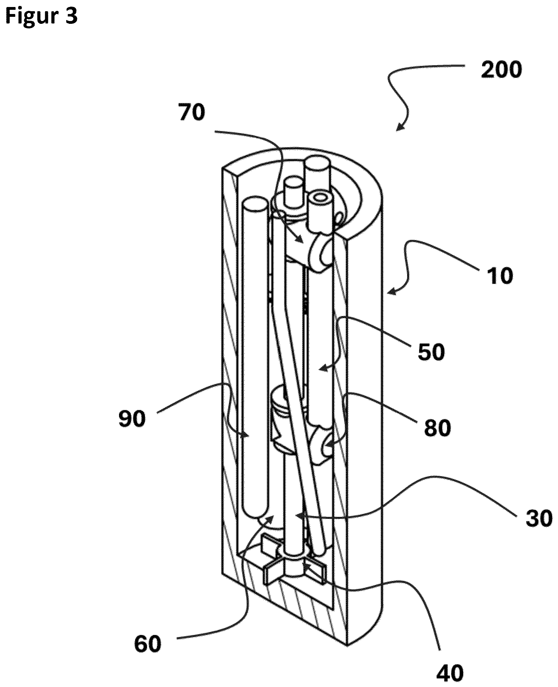

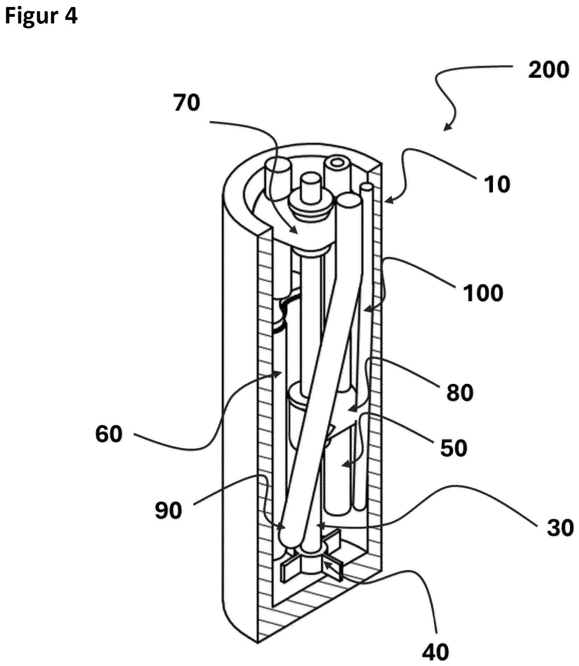

Die Figur 3 zeigt eine schematische Darstellung eines erfindungsgemäßen Hochtemperaturmikroreaktors 200 in einer Schrägansicht. In diesem Schrägschnitt sind dieselben funktionalen Bestandteile des Reaktorbehälters 10 wie in der Figur 4 beschrieben dargestellt. Der Reaktor umfasst eine Welle 30 mit Rühreinrichtung 40, Kühlfinger 90, ein Probenentnahmerohr 50 und einen Aufnahmebehälter 60. Der Aufnahmebehälter 60 ist über eine Fixiervorrichtung 70 an die Welle und an das Probenentnahmerohr 50 angebunden. Eine weitere mechanische Anbindung kann über eine weitere Fixiervorrichtung 80 erfolgen, welche neben der Fixiervorrichtung 70 zu einer zusätzlichen mechanischen Stabilisierung der Welle beitragen kann. Der Reaktordeckel 20 ist in dieser Figur nicht dargestellt.

Die Figur 4 zeigt eine schematische Darstellung eines erfindungsgemäßen Hochtemperaturmikroreaktors 200 in einer weiteren Schrägansicht. In diesem Schrägschnitt sind dieselben funktionalen Bestandteile des Reaktorbehälters 10 wie in der Figur 4 beschrieben dargestellt. Der Reaktor umfasst eine Welle 30 mit Rühreinrichtung 40, Kühlfinger 90, ein Probennahmerohr 50 und einen Aufnahmebehälter 60. Der Aufnahmebehälter 60 ist über eine Fixiervorrichtung 70 an die Welle und an das Probenentnahmerohr 50 angebunden. Eine weitere mechanische Anbindung kann über eine weitere Fixiervorrichtung 80, beispielsweise in Form einer Klammer, erfolgen, welche neben der Fixiervorrichtung 70 zu einer zusätzlichen mechanischen Stabilisierung der Welle beitragen kann. Der Reaktordeckel 20 ist in dieser Figur nicht dargestellt.

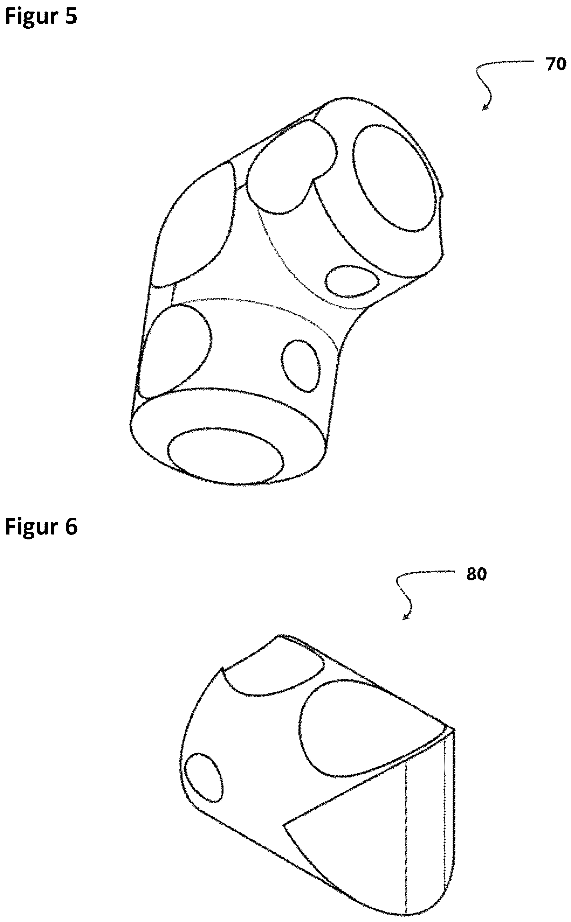

Die Figur 5 zeigt eine schematische Darstellung einer möglichen Ausgestaltung einer Fixiervorrichtung 70. Mittels dieser Fixiervorrichtung 70 kann eine effiziente mechanische Anbindung des Aufnahmebehälters 60 an die Welle 30 und das Probenentnahmerohr 50 erfolgen. In dieser Figur sind jeweils die entsprechenden Bohrungen für die funktionalen Bestandteile gezeigt. Die Fixiervorrichtung 70 kann weitere Bohrungen aufweisen, welche beispielsweise Schrauben aufnehmen können, um die Fixiervorrichtung 70 weiter mechanisch zu stabilisieren. Die größte Bohrung kann beispielsweise zur Aufnahme der Welle 30 geeignet sein, wobei in die Bohrung ein Gleitlager (nicht dargestellt), beispielsweise aus PTFE, eingeführt werden kann. Eine der weiteren Bohrungen kann das Probenentnahmerohr 50 und die weitere Bohrung den Aufnahmebehälter 60 aufnehmen.

Die Figur 6 eine schematische Darstellung einer möglichen Ausgestaltung einer weiteren Fixiervorrichtung 80. Zur weiteren mechanischen Stabilisierung kann neben der Fixiervorrichtung 70 eine weitere Fixiervorrichtung 80 im Reaktorbehälter 10 angeordnet sein. Diese weitere Fixiervorrichtung 80 kann beispielsweise knapp oberhalb der Rühreinrichtung 40 angeordnet sein und eine Bohrung für die Welle 30 und das Probenentnahmerohr 50 aufweisen. Dies kann zu einer weiteren mechanischen Stabilisierung des Rührvorgangs beitragen. Die weitere Fixiervorrichtung 80 kann ebenfalls Bohrungen aufweisen, welche beispielsweise Schrauben aufnehmen können, um die weitere Fixiervorrichtung 80 mechanisch zu stabilisieren. Die größte Bohrung kann beispielsweise zur Aufnahme der Welle 30 geeignet sein, wobei in die Bohrung ein Gleitlager (nicht dargestellt), beispielsweise aus PTFE, eingeführt werden kann.

### Bezugszeichenliste

- 200: Hochtemperaturmikroreaktor
- 10: Reaktorbehälter
- 20: Reaktordeckel
- 30: Welle
- 40: Rühreinrichtung
- 50: Probenentnahmerohr
- 60: Aufnahmebehälter
- 70: Fixiervorrichtung
- 80: weitere Fixiervorrichtung
- 90: Kühlfinger
- 100: Thermofühler

## Patentansprüche

1. Hochtemperaturmikroreaktor (200) umfassend einem Reaktorbehälter (10) und einem auf dem Reaktorbehälter (10) mechanisch anordbaren Reaktordeckel (20), wobei das Innenvolumen des Reaktorbehälters (10) kleiner oder gleich 300 cm³ beträgt und der Reaktorbehälter (10) und der Reaktordeckel (20), zumindest zum Teil, aus Metall bestehen, wobei der Mikroreaktor (200) mindestens eine, durch den Reaktordeckel (20) führbare mechanische Welle (30) zum Antrieb einer im Reaktorbehälter (10) liegenden Rühreinrichtung (40) und ein, durch den Reaktordeckel (20) führbares Probenentnahmerohr (50) umfasst, **dadurch gekennzeichnet, dass** der Mikroreaktor (200) einen im Inneren des Reaktorbehälters (10) anordbaren, zur Aufnahme partikulärer Festkörper geeigneten, flüssigkeitsdurchlässigen Aufnahmebehälter (60) aufweist, wobei der Aufnahmebehälter (60) über eine Fixiervorrichtung (70) ortsfest an der mechanischen Welle (30) befestigbar ist.

2. Hochtemperaturmikroreaktor nach Anspruch 1, wobei die Fixiervorrichtung (70) dazu eingerichtet ist den Aufnahmebehälter (60) an der mechanischen Welle (30) und am Probenentnahmerohr (50) ortsfest anzuordnen.

3. Hochtemperaturmikroreaktor nach einem der vorhergehenden Ansprüche, wobei im Reaktor zwei Fixiervorrichtungen (70) vorliegen, wobei eine der Fixiervorrichtungen (70) das Probenentnahmerohr (50), die mechanische Welle (30) und den Aufnahmebehälter (60) und eine weitere Fixiervorrichtung (80) das Probenentnahmerohr (50) und die mechanische Welle (30) mechanisch gegeneinander fixieren.

4. Hochtemperaturmikroreaktor nach einem der vorhergehenden Ansprüche, wobei die Fixiervorrichtung (70) mindestens ein Gleitlager aufweist.

5. Hochtemperaturmikroreaktor nach einem der vorhergehenden Ansprüche, wobei die Wände des Aufnahmebehälters (60) aus einem Drahtgeflecht bestehen, wobei die Maschenweite des Drahtgeflechts größer oder gleich 37 µm und kleiner oder gleich 400 µm beträgt.

6. Hochtemperaturmikroreaktor nach einem der vorhergehenden Ansprüche, wobei die Fixiervorrichtung (70) Befestigungsmittel zur weiteren mechanischen Befestigung des Aufnahmebehälters (60) aufweist.

7. Hochtemperaturmikroreaktor nach einem der vorhergehenden Ansprüche, wobei das Innenvolumen des Reaktorbehälters (10) zylindrisch ausgestaltet ist, wobei ein Verhältnis aus dem Innendurchmesser des Reaktorbehälters (10) zur größten Ausdehnung der Fixiervorrichtung (70) in radialer Richtung, ermittelt nach Innendurchmesser des Reaktorbehälters (10) dividiert durch längste Ausdehnung der Fixiervorrichtung (70) in radialer Richtung, größer oder gleich 2 und kleiner oder gleich 4 beträgt.

8. Hochtemperaturmikroreaktor nach einem der vorhergehenden Ansprüche, wobei der Aufnahmebehälter (60) ein Innenvolumen von größer oder gleich 5% und kleiner oder gleich 20 % bezogen auf das Volumen des Reaktorbehälter (10) aufweist.

9. Hochtemperaturmikroreaktor nach einem der vorhergehenden Ansprüche, wobei im Inneren des Mikroreaktors (200) zwei voneinander getrennte Aufnahmeräume (60) angeordnet sind.

10. Verwendung eines Hochtemperaturmikroreaktor (200) nach einem der vorhergehenden Ansprüche zur Durchführung einer katalysierten, chemischen Reaktion, **dadurch gekennzeichnet, dass** die im flüssigkeitsdurchlässigen Aufnahmebehälter (60) angeordneten partikulären Festkörper eine mittlere Partikelgröße, ermittelt über Mikroskopie, von größer oder gleich 75 µm und kleiner oder gleich 300 µm aufweisen.
